# EUROPÄISCHE PATENTSCHRIFT

(11) **EP 2 834 906 B1**
(45) Veröffentlichungstag und Bekanntmachung des Hinweises auf die Patenterteilung: **28.02.2018**
(21) Anmeldenummer: 13713790.7
(22) Anmeldetag: 21.03.2013
(51) Int. Cl.: H02K 5/20, H02K 9/18, H02K 9/19

(54) **ELEKTRISCHE MASCHINE**
ELECTRICAL MACHINE
MOTEUR ÉLECTRIQUE

(30) Priorität: 03.04.2012 DE 102012205404
(43) Veröffentlichungstag der Anmeldung: 11.02.2015
(73) Patentinhaber: Bayerische Motoren Werke Aktiengesellschaft, 80809 München (DE)
(72) Erfinder: HUBER, Andreas, 84034 Landshut (DE)
(86) Internationale Anmeldenummer: PCT/EP2013/055890
(87) Internationale Veröffentlichungsnummer: WO 2013/149841

(56) Entgegenhaltungen:
- EP-A2- 0 729 215
- EP-A2- 2 110 931
- WO-A1-2012/024778
- DE-A1- 19 757 605
- DE-A1-102007 035 271

## Beschreibung

Die vorliegende Erfindung betrifft eine elektrische Maschine zum Antrieb eines Kraftfahrzeugs.

Bei größeren elektrischen Maschinen, die beispielsweise zum Antrieb eines Kraftfahrzeugs verwendet werden, bedarf es teilweise einer Kühlung des Statorgehäuses, zur Abführung der entstehenden Verlustleistung.

Druckschrift DE102007035271 wird als nächstliegender Stand der Technik angesehen und offenbart die Merkmale der Präambel des unabhängigen Anspruchs 1. Es ist Aufgabe vorliegender Erfindung eine elektrische Maschine anzugeben, die bei kostengünstiger Herstellung und bei wartungsarmem Betrieb effektiv gekühlt werden kann.

Die Lösung dieser Aufgabe erfolgt durch die Merkmale des Anspruchs 1. Die abhängigen Ansprüche haben bevorzugte Weiterbildungen der Erfindung zum Gegenstand.

Somit wird die Aufgabe gelöst durch eine elektrische Maschine zum Antrieb eines Kraftfahrzeugs, umfassend einen Rotor mit einer sich in Axialrichtung erstreckenden Rotorwelle. Des Weiteren sind ein den Rotor umgebender Stator und ein den Stator aufnehmendes Statorgehäuse vorgesehen. In diesem Statorgehäuse ist eine Kühlleitung integriert. Die Kühlleitung setzt sich zusammen aus einer Aneinanderreihung von Kanälen und Umlenkanteilen. Zwischen benachbarten Kanälen befindet sich jeweils ein Umlenkanteil. Dadurch ist die Kühlleitung entlang des Umfangs des Statorgehäuses mäanderförmig ausgebildet. Die Kühlleitung im Statorgehäuse wird bevorzugt durch entsprechende Aussparungen beim Gussvorgang des Statorgehäuses hergestellt. Alternativ oder zusätzlich können die Kanäle und Umlenkanteile der Kühlleitung auch spanend hergestellt werden. Die Erfindung ermöglicht ein sehr enges Anschmiegen der Kühlleitung an die zu kühlenden Flächen. Des Weiteren kann das Statorgehäuse sehr einfach aufgebaut werden, wobei gleichzeitig die Kühlleitung integrierbar ist. Es bedarf beispielweise keines mehrschichtigen Aufbaus des Statorgehäuses zur Ausbildung der Kühlleitung, schließt dies aber auch nicht aus.

Die Richtungen an der elektrischen Maschine sind wie folgt definiert: Die Rotorwelle erstreckt sich in einer Axialrichtung. Senkrecht zu der Axialrichtung steht eine Radialrichtung. Senkrecht zur Radialrichtung und senkrecht zur Axialrichtung ist eine Umfangsrichtung definiert. Dementsprechend erstreckt sich eine Mantelfläche des Statorgehäuses entlang der Umfangsrichtung. Die beiden Stirnseiten des Statorgehäuses stehen senkrecht zu Axialrichtung und parallel zur Radialrichtung.

Bevorzugt ist vorgesehen, dass die Kanäle und Umlenkanteile dicht ineinander übergehen, so dass eine geschlossene Kühlleistung gebildet ist. Das fluide Kühlmittel kann dadurch nur in vordefinierten Bahnen durch die Kühlleitung strömen. Insbesondere fließt das Kühlmittel von einem Kanal über einen Umlenkanteil in den nächsten Kanal und von diesem Kanal wiederrum über einen weiteren Umlenkanteil in den übernächsten Kanal. Die einzelnen Kanäle haben also jeweils nur zwei Öffnungen, an denen jeweils ein Umlenkanteil anbeordnet ist. Desweitern ist bevorzugt vorgesehen, dass ein Umlenkanteil lediglich zwei Kanäle miteinander verbindet. Dadurch wird ein definierter Weg des Kühlmittels in der Kühlleitung vorgegeben. Alternativ kann ein Umlenkanteil aber auch den Kühlmittelstrom von zwei oder mehreren Kanälen zusammenführen und oder im beliebigem Verhältnis auf zwei oder mehrere Kanäle aufteilen.

In bevorzugter Ausführung sind die Kanäle rechteckig ausgebildet. Weiterhin ist bevorzugt eine Kanalbreite in Umfangsrichtung definiert und eine Kanalhöhe in Radialrichtung definiert. Besonders bevorzugt ist vorgesehen, dass ein Verhältnis von Kanalhöhe zu Kanalbreite zwischen 1/10 und 1/2 liegt. Dadurch werden relativ breite Kanäle mit relativ geringer Höhe vorgegeben. Dies hat eine geringe Dicke des Statorgehäuses in Radialrichtung zur Folge und ermöglicht gleichzeitig eine sehr breite Fläche zur Wärmeübertragung zwischen dem Kühlmittel und dem zu kühlenden Stator beziehungsweise dem zu kühlenden Statorgehäuse.

Vorteilhafterweise erstrecken sich die Kanäle in der Mantelfläche des Statorgehäuses parallel zu Axialrichtung. Bei einer Anordnung der Kanäle parallel zur Axialrichtung ermöglichen die Umlenkanteile eine Umlenkung um etwa 180 Grad. Allerdings ist bevorzugt auch ein Abweichen von der Axialrichtung um bis zu dreißig Grad möglich. Ebenso ist eine Anordnung der Kanäle im Motorgehäuse in parallelen, offenen Ringen um die Motorachse denkbar, wobei die einzelnen Ringe jeweils durch Umlenkbereiche miteinander verbunden sind.

Die Umlenkanteile sind derart ausgestaltet, dass das Kühlmittel sehr effektiv von einem Kanal zum anderen Kanal umgeleitet werden kann. Dabei muss die Strömung des Kühlmittels beachtet werden um den Energieaufwand für eine Kühlmittelpumpe zu reduzieren. Des Weiteren sollen sich möglichst wenige Totwasserzonen in der Kühlmittelströmung bilden, so dass das Kühlmittel stets in Bewegung ist und möglichst viel Wärme abtransportieren kann.

So ist bevorzugt vorgesehen, dass ein Verhältnis der maximalen Querschnittsfläche im Umlenkanteil zur mittleren Querschnittsfläche im Kanal zwischen 0,5 und 4 liegt. Vorzugsweise liegt dieses Verhältnis zwischen 1 und 2.

In vorteilhafter Ausbildung erstrecken sich die Umlenkanteile in Umfangsrichtung und die Kanäle münden seitlich in die Umlenkanteile.

Hierzu sind die Umlenkanteile beispielsweise als gerade Rohre ausgebildet. Diese Rohre erstrecken sich in Umfangsrichtung und die Kanäle münden in die Mantelfläche der Rohre. Der Querschnitt der Rohre ist insbesondere rechteckig oder rund. Die Rohre können gerade oder leicht gebogen ausgebildet werden. Die leicht gebogenen Rohre bieten eine sehr verlustoptimierte Strömungsumleitung von einem Kanal zum anderen Kanal.

Besonders bevorzugt wird der Umlenkanteil bananenförmig ausgebildet. Betrachtet man diese Bananenform entlang der Umfangsrichtung, so steigt die Querschnittsfläche im Umlenkanteil zunächst bis zu einem Maximalwert an. Von diesem Maximalwert fällt die Querschnittfläche im Umlenkanteil wieder ab. Die beiden Kanäle münden seitlich in die Mantelfläche dieser Bananenform.

Insbesondere ist vorgesehen, dass der bananenförmige Umlenkanteil eine konvexe Krümmung umfasst. Die konvexe Krümmung erstreckt sich in Axialrichtung und oder in Radialrichtung. Diese gekrümmte Ausbildung der Banane ist insbesondere wie folgt definiert: Die Bananenform ist axialseitig durch eine Wand begrenzt. Diese Wand ist in Axialrichtung bogenförmig ausgebildet und weist somit eine "konvexe Krümmung in Axialrichtung" auf. Nach Außen oder Innen, das heißt in Radialrichtung nach Außen oder Innen, ist die Bananenform ebenfalls begrenzt und kann bogenförmig ausgebildet sein. Hier weist der bananenförmige Umlenkanteil eine konvexe Krümmung in Radialrichtung auf.

In bevorzugter Ausführung weist eine radial innerste Begrenzung der Kanäle den gleichen Abstand zur Rotorwelle auf, wie eine radial innerste Begrenzung der Umlenkanteile. Insbesondere ist diese Ausbildung in Verbindung mit den bananenförmigen Umlenkanteilen bevorzugt vorgesehen. Die Krümmung des bananenförmigen Umlenkanteils erstreckt sich somit in Radialrichtung ausschließlich nach außen. Dies hat zum einen einen strömungsoptimierten Umlenkverlauf für das Kühlmedium zur Folge. Zu anderen kann durch diese Ausbildung eine sehr große Fläche zwischen dem Stator und der Kühlleitung gebildet werden.

In einer weiteren Alternative wird der Umlenkanteil als stark gebogenes Rohr ausgebildet. Das Rohr ist dabei so weit gebogen, sodass die Kanäle stimseitig in das Rohr münden können. Bei parallel angeordneten Kanälen bedeutet dies, dass das Rohr um 180 Grad gebogen ist. Dieses gebogene Rohr kann einen runden, ovalen oder vieleckigen Querschnitt aufweisen.

Die Rotorwelle ist bevorzugt im Statorgehäuse gelagert. So kann die Kühlleitung gleichzeitig auch zur Kühlung der Lagerung der Rotorwelle verwendet werden. Besonders bevorzugt weist die Kühlleitung zumindest an einer Stelle anstatt eines Umlenkanteils eine Lagerkühlschleife auf. Die Lagerkühlschleife führt von dem Ende eines Kanals, bevorzugt um das Lager der Rotorwelle herum, zu einem anderen Kanal.

Alternativ zur Ausbildung der Lagerkühlschleife ist es auch möglich, die Umlenkanteile in die Stirnseite des Statorgehäuses zu verlegen. Dadurch sind die Umlenkanteile näher an der Lagerung und können besser zu Kühlung der Lagerung verwendet werden. Insbesondere weisen hierzu die Kanäle an ihren Enden um etwa 90 Grad gebogene Zwischenstücke auf. Diese Zwischenstücke sind in Richtung der Rotorwelle gebogen, so dass dann die Umlenkanteile in der Stimseite des Statorgehäuses angeordnet sind.

Die Umlenkanteile in der gesamten Kühlleitung müssen nicht alle gleich ausgestaltet werden. So ist es auch vorgesehen, dass verschiedene Umlenkanteile zwischen den Kanälen angeordnet werden. Genauso ist es möglich nur auf einer Seite oder auf beiden Seiten eine Lagerkühlung für die Lagerung der Rotorwelle auszubilden. Die Lagerkühlung kann auf beiden Stirnseiten unterschiedlich sein, so kann beispielsweise auf einer Stimseite eine Lagerkühlschleife ausgebildet werden und auf der anderen Stirnseite können die Umlenkanteile in die Stirnseite des Statorgehäuses zur Kühlung der Lagerung verlegt werden.

Des Weiteren ist bevorzugt vorgesehen, dass das Statorgehäuse einen Grundkörper und einen Deckel umfasst. Der Deckel bildet im Wesentlichen die eine Stimseite des Statorgehäuses. Die Umlenkanteile einer axialen Seite sowie die Kanäle werden bevorzugt in dem Grundkörper ausgebildet. In dem Deckel befinden sich dann die Umlenkanteile der anderen axialen Seite. Die zweiteilige Ausbildung des Statorgehäuses hat eine einfachere Fertigung der Hohlräume zur Folge. Ebenso ist auch eine Ausgestaltung mit einem Mantelelement und zwei stimseitigen Deckeln denkbar.

Bevorzugt umfasst die Kühlleitung zumindest zwei Anschlüsse für eine Kühlmittelpumpe.

Bevorzugt wird die elektrische Maschine zum Antrieb eines Kraftfahrtzeugs verwendet.

Im Folgenden werden Ausführungsbeispiele der vorliegenden Erfindung anhand der begleitenden Zeichnung im Detail erläutert. Dabei zeigen:
- Fig.1: eine erfindungsgemäße elektrische Maschine gemäß allen Ausführungsbeispielen,
- Fig. 2: eine Kühlkanalgeometrie der erfindungsgemäßen elektrischen Maschine gemäß einem ersten Ausführungsbeispiel,
- Fig. 3 und 3a: ein Ausschnitt des Kühlkanals der erfindungsgemäßen elektrischen Maschine gemäß einem zweiten Ausführungsbeispiel,
- Fig. 4: eine Kühlkanalgeometrie der erfindungsgemäßen elektrischen Maschine gemäß einem dritten Ausführungsbeispiel,
- Fig.5: einen Vergleich der Kühlkanäle der erfindungsgemäßen elektrischen Maschinen gemäß dem zweiten und dritten Ausführungsbeispiel,
- Fig. 6: die genaue Ausbildung des Umlenkbereichs des Kühlkanals der erfindungsgemäßen elektrischen Maschinen gemäß dem zweiten und dritten Ausführungsbeispiel,
- Fig.7: ein Ausschnitt des Kühlkanals der erfindungsgemäßen elektrischen Maschine gemäß einem vierten Ausführungsbeispiel,
- Fig.8: ein Ausschnitt des Kühlkanals der erfindungsgemäßen elektrischen Maschine gemäß einem fünften Ausführungsbeispiel, und
- Fig. 9: eine Kühlkanalgeometrie der erfindungsgemäßen elektrischen Maschine gemäß einem sechsten Ausführungsbeispiel.

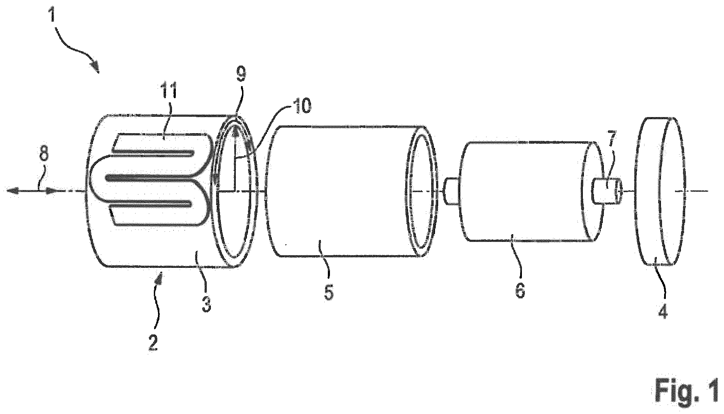

Anhand von Fig. 1 wird der generelle Aufbau der elektrischen Maschine 1 für alle Ausführungsbeispiele erläutert. Die elektrische Maschine 1 setzt sich zusammen aus einem Statorgehäuse 2, einem Stator 5 und einem Rotor 6. Der Stator 5 ist drehfest an die Innenwandung des zylindrischen Statorgehäuses 2 angebracht. Der Rotor 6 weißt eine Rotorwelle 7 auf. Diese Rotorwelle 7 ist im Statorgehäuse 2 gelagert, so dass der Rotor 6 gegenüber dem Stator 5 drehbar ist.

Das Statorgehäuse 2 setzt sich zusammen aus einem zylindrischen Grundkörper 3 und einem oder zwei Deckel 4. Jeder Deckel 4 bildet eine Stirnseite des Statorgehäuses 2.

An der elektrischen Maschine 1 sind folgende Richtungen definiert: Entlang der Rotorwelle 7 erstreckt sich eine Axialrichtung 8. Senkrecht zur Axialrichtung 8 ist eine Radialrichtung 10 definiert. Senkrecht zur Axialrichtung 8 und senkrecht zur Radialrichtung 10 ist eine Umfangsrichtung 9 definiert. Die Umfangsrichtung 9 erstreckt sich entlang einer Mantelfläche des Statorgehäuses 2.

In dem Statorgehäuse 2 ist eine Kühlleitung 11 zur Kühlung des Statorgehäuses 2 beziehungsweise zur Kühlung des Stators 5 ausgebildet. In Fig. 1 ist die Form der Kühlleitung 11 nur beispielhaft gezeigt. Die genaue Ausgestaltung der Kühlleitung 11 wird in den folgenden verschiedenen Ausführungsbeispielen genauer erläutert. Dabei kann die Kühlleitung 11 teilweise auch im Deckel 4 und nicht nur im Grundkörper 3 ausgebildet werden.

In den folgenden Figuren wird nur noch die Kühlleitung 11 dargestellt. Gleiche beziehungsweise funktional gleiche Bauteile werden in allen Ausführungsbeispielen mit denselben Bezugszeichen versehen.

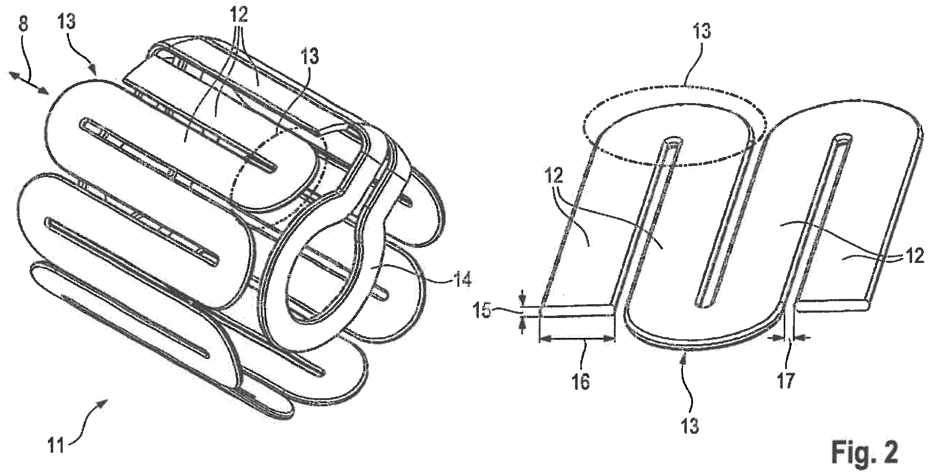

Fig. 2 zeigt die Kühlleitung 11 für ein erstes Ausführungsbeispiel der elektrischen Maschine 1. Die Kühlleitung 11 setzt sich zusammen aus parallel angeordneten Kanälen 12. Die Kanäle 12 erstrecken sich in dieser Ausgestaltung in Axialrichtung 8 und sind entlang der Umfangsrichtung 9 des Statorgehäuses 2 verteilt. Jeweils zwei benachbarte Kanäle 12 sind durch einen Umlenkanteil 13 miteinander verbunden. Dadurch entsteht eine entlang des Umfangs mäanderförmige Kühlleistung 11. Im rechten Teil der Fig. 2 ist ein Ausschnitt der Kühlleitung 11 im Detail gezeigt. Dabei ist zu sehen, dass die Kanäle 12 rechteckig ausgebildet sind und eine Kanalhöhe 15 sowie eine Kanalbreite 16 aufweisen. Die Kanalhöhe 15 ist kleiner als die Kanalbreite 16. Dadurch entstehen flache, breite Kanäle 12. Zwischen zwei Kanälen ist ein Abstand 17 eingezeichnet. Bevorzugt liegt ein Verhältnis des Abstandes 17 zur Kanalbreite 16 zwischen 1/10 und 2.

Fig. 2 zeigt des Weiteren die Ausbildung einer Lagerkühlschleife 14. Anstatt über einen Umlenkanteil 17 sind zwei der Kanäle 12 über die Lagerkühlschleife 14 miteinander verbunden. Diese Lagerkühlschleife 14 führt um eine Lagerstelle der Rotorwelle 7 herum und kühlt somit gleichzeitig auch diese Lagerstelle.

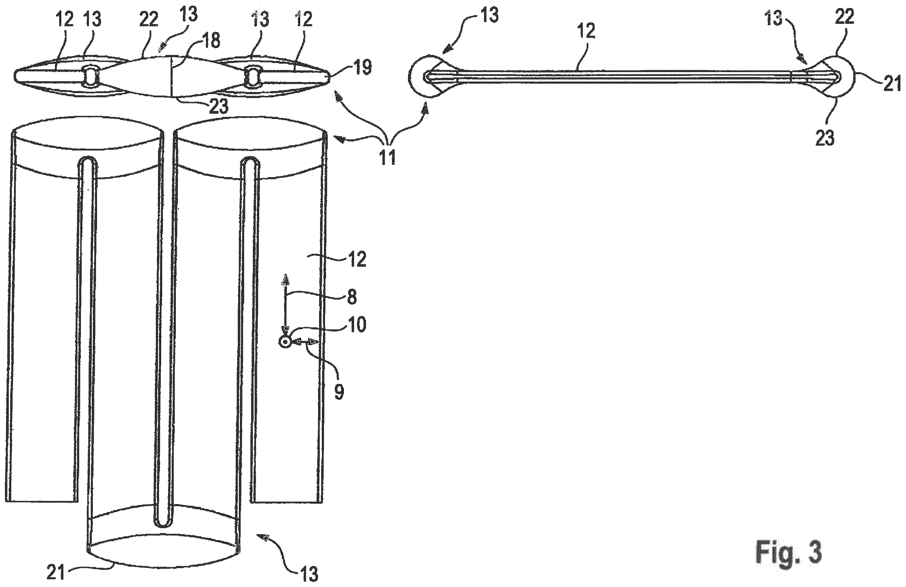

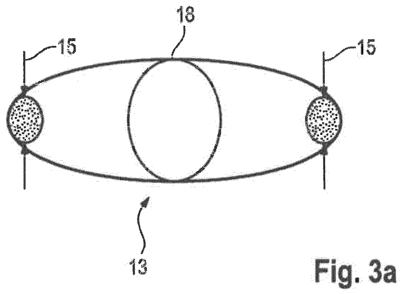

Anhand der Figuren 3 bis 6 wird ein zweites und drittes Ausführungsbeispiel der Maschine im Detail erläutert.

Fig. 3 zeigt einen Ausschnitt der Kühlleitung 11 in drei verschiedenen Ansichten. Die Umlenkanteile 13 sind hier bananenförmig ausgestaltet. Wie zu sehen ist, weist diese Bananenform eine erste Krümmung 21, eine zweite Krümmung 22 und eine dritte Krümmung 23 auf.

Die zweite Krümmung 22 und die dritte Krümmung 23 erstrecken sich jeweils in Radialrichtung 10 und bilden somit zwei gegenüberliegende, konvexe Kanten der Bananenform. Für eine weitere strömungsgünstige Ausgestaltung des Umlenkanteils 13 ist die erste Krümmung 21 vorgesehen, die eine in Axialrichtung 8 konvex gekrümmte Kannte der Bananenform darstellt.

Fig. 3a zeigt des Weiteren beispielhaft einen einzelnen bananenförmigen Umlenkanteil 13. In der dargestellten Ausgestaltung ist zu erkennen, dass der Umlenkbereich sich an seinen beiden Enden, von seiner maximalen Querschnittsfläche 18, auf die Kanalhöhe 15 verjüngt. Das Verhältnis der maximalen Querschnittsfläche 18 im Umlenkanteil 13 und der mittleren Querschnittsfläche 19 im Kanal 12 sollte im Bereich zwischen 0,5 und 4 liegt. Vorzugsweise liegt dieses Verhältnis zwischen 1 und 2.

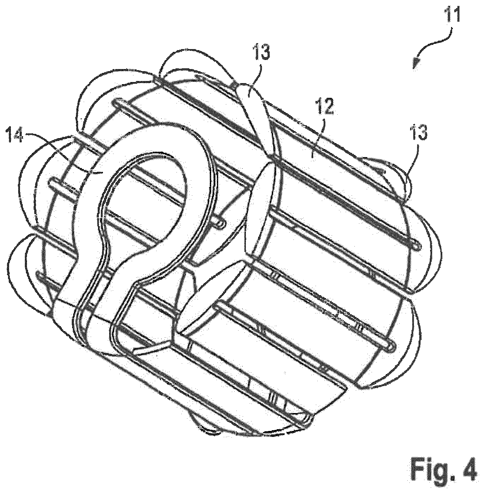

Fig. 4 zeigt ein drittes Ausführungsbeispiel der elektrischen Maschine. Hier sind die Umlenkanteile 13 ebenfalls bananenförmig ausgestaltet. Wie beispielsweise im ersten Ausführungsbeispiel gezeigt wurde, kann auch hier eine Lagerkühlschleife 14 vorgesehen werden.

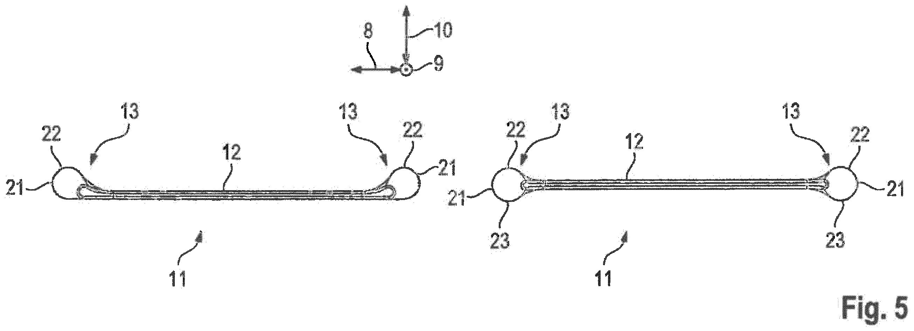

Der wesentliche Unterschied zwischen dem zweiten und dritten Ausführungsbeispiel ist, dass im dritten Ausführungsbeispiel die dritte Krümmung 23 an der Bananenform nicht vorgesehen ist. Dadurch liegt die radial innenseitige Begrenzung des Umlenkanteils 13 auf gleicher Höhe wie eine radial innenseitige Begrenzung der Kanäle 12. Dieser Unterschied zwischen dem zweiten und dritten Ausführungsbeispiel ist insbesondere in Fig. 5 zusehen. Fig. 5 zeigt auf der linken Seite die Ausbildung der Kühlleitung 11 gemäß dem dritten Ausführungsbeispiel. Auf der rechten Seite ist die Kühlleistung 11 gemäß dem zweiten Ausführungsbeispiel vorgesehen. Wie hier zu sehen ist, schließt im dritten Ausführungsbeispiel die radial innere Seite der Kanäle 12 bündig mit der radial inneren Seite der Umlenkanteil 13 ab.

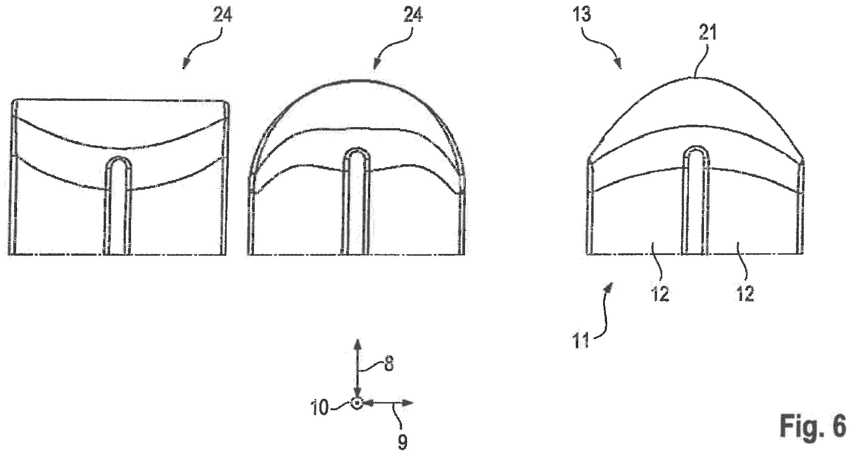

Im Folgenden wird die bananenförmige Ausgestaltung der Umlenkentelle 13 im zweiten und dritten Ausführungsbeispiel genauer erläutert. Die beiden linken Darstellungen in Fig. 6 zeigen zwei Vergleichsbeispiele 24. Bei dem einen Vergleichsbeispiel 24 ist keinerlei Krümmung vorgesehen. Bei dem rechten Vergleichsbeispiel 24 ist eine kreisförmige Krümmung vorgesehen. Der Versuch zeigte, dass die Strömung optimal umgelenkt werden kann, wenn insbesondere die erste Krümmung 21 zwischen diesen beiden extremen Vergleichsbeispielen 24 liegt.

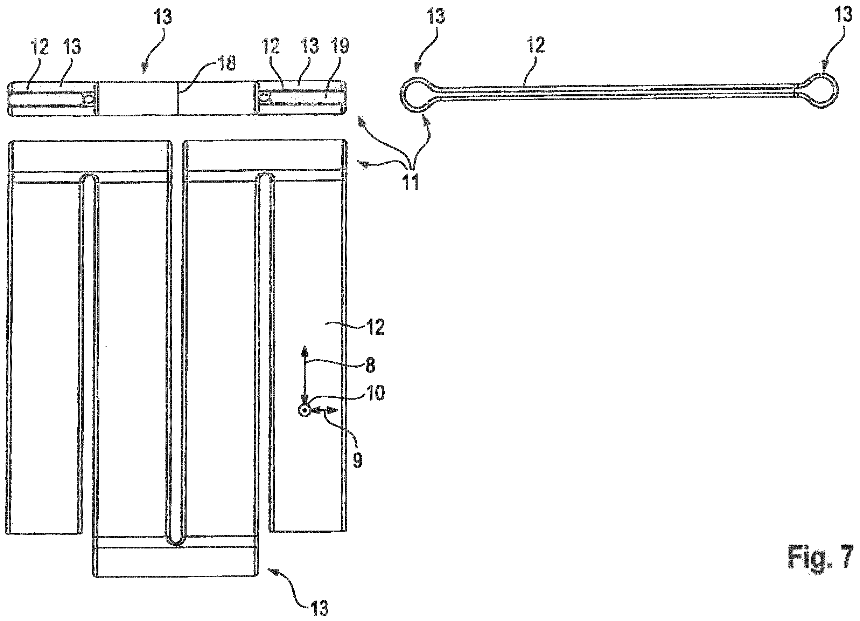

Fig. 7 zeigt ein viertes Ausführungsbeispiel der elektrischen Maschine 1. Hierbei sind wieder drei Ansichten der Kühlleitung 11 gezeigt. Die Umlenkanteil 13 sind hier durch gerade verlaufende, runde Rohre gebildet. Diese Rohre erstrecken sich in Umfangsrichtung 9. Die Kanäle 12 münden in die Mantelflächen der rohrförmigen Umlenkanteile 13, wobei die Kontaktstelle großzügig verrundet wurde.

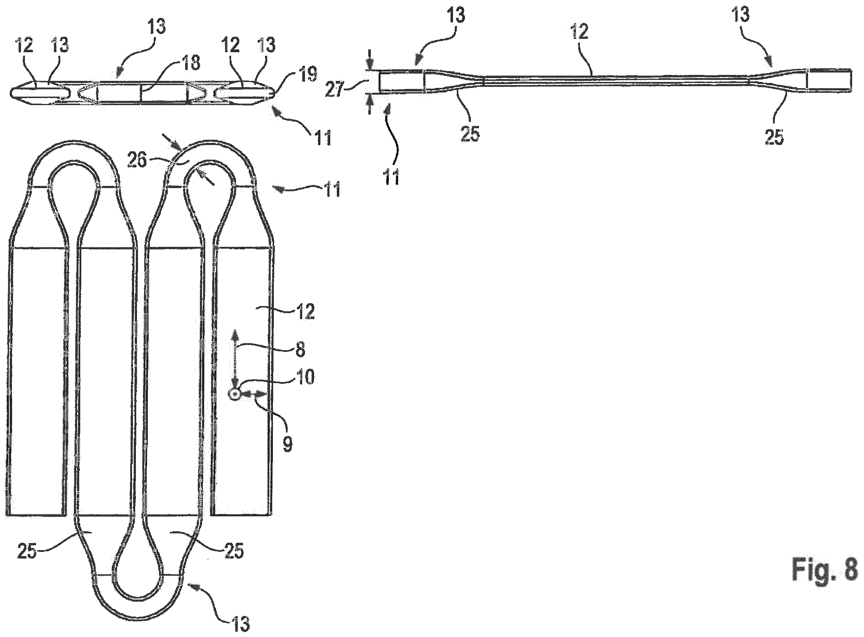

Fig. 8 zeigt die Ausbildung der Kühlleistung 11 in drei verschiedenen Ansichten eines fünften Ausführungsbeispiels der elektrischen Maschine 1. Hier sind die Umlenkanteile als gebogene Rohre ausgebildet. Diese Rohre sind hier rechteckig und um 180 Grad gebogen, so dass die Kanäle 12 in die Stirnseiten der gebogenen Umlenkanteile 13 münden. Hier ist insbesondere vorgesehen, dass ein Verhältnis der eingezeichneten Umlenkhöhe 27 zur eingezeichneten Umlenkbreite 26 zwischen 1/7 und 7 liegt.

Bevorzugt werden hier, zwischen den Umlenkanteilen 13 und den Kanälen 12, Verjüngungen 25 angeordnet.

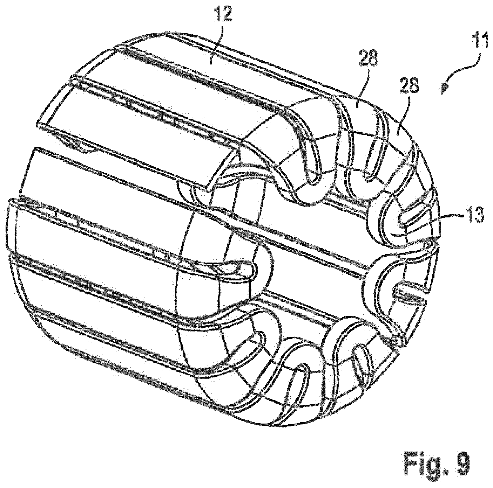

Fig. 9 zeigt die Ausbildung der Kühlleitung 11 in einer elektrischen Maschine 1 gemäß einem sechsten Ausführungsbeispiel. Hier ist gezeigt, wie die Umlenkanteile 13 in die Stirnfläche des Statorgehäuses 3 verlegt werden können. Dadurch sind die Umlenkanteile 13 näher an der Lagerstelle der Rotorwelle 7 und können zur Kühlung der Lagerstelle mitverwendet werden. Insbesondere sind hier Zwischenstücke 28 zwischen den Kanälen 12 und Umlenkanteilen 13 vorgesehen. Insbesondere weisen diese Zwischenstücke 28 einen Knick um etwa 90 Grad auf.

In allen Ausführungsbeispielen können auch unterschiedliche Umlenkanteile 13 verwendet werden. Des Weiteren können in allen Ausführungsbeispielen unterschiedliche Anordnungen zur Kühlung der Lagerstellen der Rotorwelle 7 verwendet werden. Beispiele für diese Ausführung der Kühlung sind die Lagerkühlschleife 16 oder die Verlegung der Umlenkanteile 13 in die Stirnseite des Statorgehäuses 2.

Die Querschnitte der Kanäle 12 oder Umlenkanteile 13 können auch kreisförmig, elliptisch oder vieleckig ausgebildet werden. Des Weiteren müssen die Umlenkanteile 13 nicht zwangsläufig symmetrisch ausgebildet werden.

### Bezugszeichenliste

- 1: elektrische Maschine
- 2: Statorgehäuse
- 3: Grundkörper
- 4: Deckel
- 5: Stator
- 6: Rotor
- 7: Rotorwelle
- 8: Axialrichtung
- 9: Umfangsrichtung
- 10: Radialrichtung
- 11: Kühlleistung
- 12: Kanäle
- 13: Umlenkanteil
- 14: Lagerkühlschleife
- 15: Kanalhöhe
- 16: Kanalbreite
- 17: Abstand
- 18: Maximale Querschnittsfläche im Umlenkanteil
- 19: Querschnittsfläche im Kanal
- 21, 22, 23: Krümmung bzw. konvexe Kanten
- 24: Vergleichsbeispiele
- 25: Verjüngung
- 26: Umlenkungsbreite
- 27: Umlenkungshöhe
- 28: Zwischenstücke

## Patentansprüche

1. Elektrische Maschine (1), zum Antrieb eines Fahrzeugs, umfassend:
- einen Rotor (6) mit einer sich in Axialrichtung (8) erstreckenden Rotorwelle (7),
- einen den Rotor (6) umgebenden Stator (5), und
- ein den Stator (5) aufnehmendes zylindrisches Statorgehäuse, wobei die Rotorwelle (7) im Statorgehäuse (2) drehbar gelagert ist, mit einer integrierten, geschlossenen Kühlleitung (11), wobei die Kühlleitung (11) durch eine Aneinanderreihung von sich in Axialrichtung (8) ersteckenden Kanälen (12) und benachbarte, sich in Axialrichtung erstreckende Kanäle (12) verbindenden Umlenkanteile mäanderförmig ausgebildet ist, wobei durch die Kühlleitung (11) ein fluides Kühlmittel strömt, **dadurch gekennzeichnet, dass** das Statorgehäuse (2) einen Grundkörper (3) und einen, die Stirnseite des Statorgehäuses (2) bildenden Deckel (4) umfasst, wobei die Umlenkanteile (13) auf einer axialen Seite des Grundkörpers (3) und die sich in Axialrichtung (8) erstreckenden Kanäle (12) integral im Grundkörper (3) ausgebildet sind und die Umlenkanteile (13) auf der anderen axialen Seite des Grundkörpers (3) im Deckel (4) ausgebildet sind.

2. Elektrische Maschine nach Anspruch 1, **dadurch gekennzeichnet, dass** die Kanäle (12) und Umlenkanteile (13) dicht ineinander übergehen.

3. Elektrische Maschine nach einem der vorhergehenden Ansprüche, **dadurch gekennzeichnet, dass** jeweils ein Umlenkanteil (13) lediglich zwei Kanäle (12) miteinander verbindet.

4. Elektrische Maschine nach einem der vorhergehenden Ansprüche, **dadurch gekennzeichnet, dass** ein Umlenkanteil (13) den Kühlmittelstrom von zwei oder mehreren Kanälen (12) zusammenführt und oder im beliebigem Verhältnis auf zwei oder mehrere Kanäle (12) aufteilt.

5. Elektrische Maschine nach einem der vorhergehenden Ansprüche, **dadurch gekennzeichnet, dass** die Kanäle (12) rechteckig sind, wobei ein Verhältnis von Kanalhöhe (15) zu Kanalbreite (16) zwischen 1/10 und 1/2 liegt.

6. Elektrische Maschine nach einem der vorhergehenden Ansprüche, **dadurch gekennzeichnet, dass** sich die Kanäle (12) in der Mantelfläche des Statorgehäuses (2) parallel zur Axialrichtung (8) erstrecken oder mit einem Winkel von maximal 30° gegenüber der Axialrichtung (8) geneigt sind.

7. Elektrische Maschine nach einem der vorhergehenden Ansprüche, **dadurch gekennzeichnet, dass** sich die Kanäle (12) in der Mantelfläche des Statorgehäuses (2) tangential um um den zylindrischen Grundkörper (3) des Statorgehäuses (2) erstrecken.

8. Elektrische Maschine nach einem der vorhergehenden Ansprüche, **dadurch gekennzeichnet, dass** das Verhältnis zwischen dem Abstand (17) und der Breite (16) der Kanäle (12) in der Mantelfläche des Statorgehäuses (2) zwischen 1/10 und 2 liegt.

9. Elektrische Maschine nach einem der vorhergehenden Ansprüche, **dadurch gekennzeichnet, dass** ein Verhältnis der maximalen Querschnittsfläche (18) im Umlenkanteil (13) zur mittleren Querschnittsfläche (19) im Kanal (12) zwischen 0,5 und 4, vorzugsweise zwischen 1 und 2, liegt.

10. Elektrische. Maschine nach einem der vorhergehenden Ansprüche, **dadurch gekennzeichnet, dass** sich die Umlenkanteile (13) in Umfangsrichtung (9) erstrecken und die Kanäle (12) seitlich in die Umlenkanteile (13) münden.

11. Elektrische Maschine nach einem der vorhergehenden Ansprüche, **dadurch gekennzeichnet, dass** zumindest ein Umlenkanteil (13) als gerades Rohr ausgebildet ist, und die Kanäle (12) in die Mantelfläche des Rohres münden.

12. Elektrische Maschine nach einem der vorhergehenden Ansprüche, **dadurch gekennzeichnet, dass** zumindest ein Umlenkanteil (13) bananenförmig ausgebildet ist, so dass die Querschnittsfläche (18) im Umlenkanteil (13) entlang der Umfangsrichtung (9) bis zu einem Maximum ansteigt und nach dem Maximum wieder abfällt, wobei die Kanäle (12) in die Mantelfläche der Bananenform münden.

13. Elektrische Maschine nach Anspruch 9, **dadurch gekennzeichnet, dass** der bananenförmige Umlenkanteil (13) eine konvexe Krümmung (21, 22, 23) in Axialrichtung und/oder in Radialrichtung umfasst.

14. Elektrische Maschine, nach einem der vorhergehenden Ansprüche, **dadurch gekennzeichnet, dass** eine radial innerste Begrenzung der Kanäle (12) den gleichen Abstand zur Rotorwelle (7) aufweist wie eine radial innersten Begrenzung der Umlenkanteile (13).

15. Elektrische Maschine nach einem der vorhergehenden Ansprüche, **dadurch gekennzeichnet, dass** zumindest ein Umlenkanteil (13) als gebogenes Rohr ausgebildet ist, wobei das Rohr derart gebogen ist, sodass die Kanäle (12) stirnseitig in das Rohr münden.

16. Elektrische Maschine nach einem der vorhergehenden Ansprüche, **dadurch gekennzeichnet, dass** in der Kühlleitung (11) anstelle zumindest eines Umlenkanteils (13) eine Lagerkühlschleife (14) zur Kühlung einer Lagerung der Rotorwelle (7) ausgebildet ist.

17. Elektrische Maschine nach einem der vorhergehenden Ansprüche, **dadurch gekennzeichnet, dass** die Kanäle (12) ein um etwa 90° gebogenes Zwischenstück (28) zur Anbindung an die Umlenkanteile (13) aufweisen, sodass zumindest ein Umlenkanteil (13) in der Stirnseite des Statorgehäuses (2) angeordnet ist.

18. Elektrische Maschine nach einem der vorhergehenden Ansprüche, **dadurch gekennzeichnet, dass** das Statorgehäuse (2) einen Grundkörper (3) und zwei Deckel (4) umfasst, wobei die Kanäle (12) integral im Grundkörper (3) ausgebildet sind und die Umlenkanteile (13) in den beiden Deckeln (4) ausgebildet sind.

## Claims

1. An electric machine (1), for driving a vehicle, comprising:
- a rotor (6) with a rotor shaft (7) extending in the axial direction (8),
- a stator (5) surrounding the rotor (6), and
- a cylindrical stator housing which receives the stator (5), wherein the rotor shaft (7) is rotatably mounted in the stator housing (2), with an integrated, closed cooling line (11), wherein the cooling line (11) is formed in meandering fashion by a sequence of ducts (12) which extend in the axial direction (8) and deflecting portions which connect adjacent ducts (12) which extend in the axial direction, wherein a fluid coolant flows through the cooling line (11),
**characterised in that** the stator housing (2) comprises a base body (3) and a cover (4) forming the end face of the stator housing (2), the deflecting portions (13) on one axial side of the base body (3) and the ducts (12) which extend in the axial direction (8) being formed integrally in the base body (3), and the deflecting portions (13) on the other axial side of the base body (3) being formed in the cover (4).

2. An electric machine according to Claim 1, **characterised in that** the ducts (12) and deflecting portions (13) merge tightly into one another.

3. An electric machine according to one of the preceding claims, **characterised in that** one deflecting portion (13) in each case connects merely two ducts (12) together.

4. An electric machine according to one of the preceding claims, **characterised in that** one deflecting portion (13) combines the coolant flow of two or more ducts (12) and/or distributes it in any ratio whatsoever between two or more ducts (12).

5. An electric machine according to one of the preceding claims, **characterised in that** the ducts (12) are rectangular, with a ratio of duct height (15) to duct width (16) being between 1/10 and 1/2.

6. An electric machine according to one of the preceding claims, **characterised in that** the ducts (12) extend in the peripheral surface of the stator housing (2) parallel to the axial direction (8) or are inclined at an angle of at most 30° relative to the axial direction (8).

7. An electric machine according to one of the preceding claims, **characterised in that** the ducts (12) extend in the peripheral surface of the stator housing (2) tangentially around the cylindrical base body (3) of the stator housing (2).

8. An electric machine according to one of the preceding claims, **characterised in that** the ratio between the distance (17) and the width (16) of the ducts (12) in the peripheral surface of the stator housing (2) is between 1/10 and 2.

9. An electric machine according to one of the preceding claims, **characterised in that** a ratio of the maximum cross-sectional surface area (18) in the deflecting portion (13) to the mean cross-sectional area (19) in the duct (12) is between 0.5 and 4, preferably between 1 and 2.

10. An electric machine according to one of the preceding claims, **characterised in that** the deflecting portions (13) extend in the peripheral direction (9) and the ducts (12) open laterally into the deflecting portions (13).

11. An electric machine according to one of the preceding claims, **characterised in that** at least one deflecting portion (13) is formed as a straight tube, and the ducts (12) open into the peripheral surface of the tube.

12. An electric machine according to one of the preceding claims, **characterised in that** at least one deflecting portion (13) is banana-shaped, so that the cross-sectional area (18) in the deflecting portion (13) increases up to a maximum along the peripheral direction (9) and decreases again after the maximum, the ducts (12) opening into the peripheral surface of the banana shape.

13. An electric machine according to Claim 9, **characterised in that** the banana-shaped deflecting portion (13) comprises a convex curvature (21, 22, 23) in the axial direction and/or in the radial direction.

14. An electric machine according to one of the preceding claims, **characterised in that** a radially innermost delimitation of the ducts (12) is at the same distance from the rotor shaft (7) as a radially innermost delimitation of the deflecting portions (13).

15. An electric machine according to one of the preceding claims, **characterised in that** at least one deflecting portion (13) is formed as a bent tube, the tube being bent in such a way so that the ducts (12) open into the tube on the end face.

16. An electric machine according to one of the preceding claims, **characterised in that** a bearing cooling loop (14) for cooling a bearing of the rotor shaft (7) is formed in the cooling line (11) instead of at least one deflecting portion (13).

17. An electric machine according to one of the preceding claims, **characterised in that** the ducts (12) have an intermediate piece (28) bent by about 90° for attaching to the deflecting portions (13), so that at least one deflecting portion (13) is arranged in the end face of the stator housing (2).

18. An electric machine according to one of the preceding claims, **characterised in that** the stator housing (2) comprises a base body (3) and two covers (4), the ducts (12) being formed integrally in the base body (3) and the deflecting portions (13) being formed in the two covers (4).

## Revendications

1. Moteur électrique (1), permettant d'entraîner un véhicule comprenant:
- un rotor (6) équipé d'un arbre de rotor (7) s'étendant en direction axiale (8),
- un stator (5) entourant le rotor (6), et
- un carter de stator cylindrique recevant le stator (5), l'arbre du rotor (7) étant monté mobile en rotation dans le carter du stator (2), équipé d'une conduite de refroidissement (11) fermée intégrée, cette conduite de refroidissement (11) étant réalisée en forme de méandres par un alignement côte à côte de canaux (12) s'étendant dans la direction axiale (8) et de segments de changement de direction voisins (13) reliant les canaux (12) s'étendant en direction axiale, un fluide de refroidissement circulant dans la conduite de refroidissement (11),
**caractérisé en ce que**
le carter du stator (2) comporte un corps de base (3) et un couvercle (4) formant son côté frontal, les segments de changement de direction (13) sur un côté axial du corps de base (3) et les canaux (12) s'étendant dans la direction axiale (8) étant formés intégralement dans le corps de base (3), et les segments de changement de direction (13) situés sur l'autre côté axial du corps de base (3) étant formés dans le couvercle (4).

2. Moteur électrique conforme à la revendication 1,
**caractérisé en ce que**
les canaux (12) et les segments de changement de direction (13) se connectent hermétiquement.

3. Moteur électrique conforme à l'une des revendications précédentes,
**caractérisé en ce qu'**
un segment de changement de direction (13) respectif ne relie que deux canaux (12).

4. Moteur électrique conforme à l'une des revendications précédentes,
**caractérisé en ce qu'**
un segment de changement de direction (13) rassemble le flux de fluide de refroidissement d'au moins deux canaux (12) et/ou le subdivise selon une proportion souhaitée sur au moins deux canaux (12).

5. Moteur électrique conforme à l'une des revendications précédentes,
**caractérisé en ce que**
les canaux (12) sont rectangulaires, et le rapport entre la hauteur (15) et la largeur (16) des canaux est situé entre 1/10 et 1/2.

6. Moteur électrique conforme à l'une des revendications précédentes,
**caractérisé en ce que**
les canaux (12) s'étendent parallèlement à la direction axiale, dans la surface enveloppe du carter du stator (2) ou sont inclinés d'un angle au maximum égal à 30° par rapport à la direction axiale (8).

7. Moteur électrique conforme à l'une des revendications précédentes,
**caractérisé en ce que**
les canaux (12) s'étendent tangentiellement dans la surface enveloppe du carter du stator (2) autour du corps de base cylindrique (3) de ce carter du stator (2).

8. Moteur électrique conforme à l'une des revendications précédentes,
**caractérisé en ce que**
le rapport entre la distance (17) et la largeur (16) des canaux (12) dans la surface enveloppe du carter du stator (2) est compris entre 1/10 et 2.

9. Moteur électrique conforme à l'une des revendications précédentes,
**caractérisé en ce que**
le rapport entre la surface de la section maximum (18) du segment de changement de direction (13) et la surface de la section transversale moyenne (19) du canal (12) est compris entre 0,5 et 4, de préférence entre 1 et 2.

10. Moteur électrique conforme à l'une des revendications précédentes,
**caractérisé en ce que**
les segments de changement de direction (13) s'étendent en direction périphérique (9) et les canaux (12) débouchent latéralement dans les segments de changement de direction (13).

11. Moteur électrique conforme à l'une des revendications précédentes,
**caractérisé en ce qu'**
au moins un segment de changement de direction (13) est réalisé sous la forme d'un tube rectiligne, et les canaux (12) débouchent dans la surface enveloppe de ce tube.

12. Moteur électrique conforme à l'une des revendications précédentes,
**caractérisé en ce qu'**
au moins un segment de changement de direction (13) est réalisé en forme de banane de sorte que la surface de la section (18) de ce segment de changement de direction (13) augmente jusqu'à un maximum le long de la direction périphérique (9) puis diminue à nouveau après ce maximum, les canaux (12) débouchant dans la surface enveloppe de la forme de banane.

13. Moteur électrique conforme à la revendication 9,
**caractérisé en ce que**
le segment de changement de direction en forme de banane (13) a une courbure convexe (21, 22, 23) dans la direction axiale et/ou dans la direction radiale.

14. Moteur électrique conforme à l'une des revendications précédentes,
**caractérisé en ce que**
la limite radiale la plus interne des canaux (12) est à la même distance de l'arbre du rotor (7) que la limite radiale la plus interne des segments de changement de direction (13).

15. Moteur électrique conforme à l'une des revendications précédentes,
**caractérisé en ce qu'**
au moins un segment de changement de direction (13) est réalisé sous la forme d'un tube cintré, ce tube étant cintré de sorte que les canaux (12) débouchent sur son côté frontal.

16. Moteur électrique conforme à l'une des revendications précédentes,
**caractérisé en ce que**
dans la conduite de refroidissement (11) est formée, à la place d'au moins un segment de changement de direction (13), une boucle de refroidissement de paliers (14) permettant de refroidir les paliers de l'arbre du rotor (7).

17. Moteur électrique conforme à l'une des revendications précédentes,
**caractérisé en ce que**
les canaux (12) comportent une pièce intermédiaire (28) cintrée d'environ 90° pour permettre de les connecter aux segments de changement de direction (13) de sorte qu'au moins un segment de changement de direction (13) soit monté dans le côté frontal du carter du stator (2).

18. Moteur électrique conforme à l'une des revendications précédentes,
**caractérisé en ce que**
le carter du stator (2) comporte un corps de base (3) et deux couvercles (4), les canaux (12) étant formés intégralement dans le corps de base (3) et les segments de changement de direction (13) étant formés dans les deux couvercles (4).
